# EUROPEAN PATENT SPECIFICATION

(11) **EP 1 942 688 B1**
(45) Date of publication and mention of the grant of the patent: **25.08.2010**
(21) Application number: 07100038.4
(22) Date of filing: 02.01.2007
(51) Int. Cl.: H04W 52/02, H04W 48/16

(54) **Power save mode in a dual mode mobile radio terminal**
Energiesparmodus in einem zweimoden Funkendgerät
Mode d'économie d'énergie dans un terminal radio bi-mode

(43) Date of publication of application: 09.07.2008
(73) Proprietor: NEC Electronics Corporation, Kawasaki, Kanagawa 211-8668 (JP)
(72) Inventor: Ormson, Richard Gavin, Workingham, Berkshire RG41 5JF (GB)
(74) Representative: Gill, David Alan

(56) References cited:
- WO-A-98/27766
- WO-A-2004/110073
- WO-A-2005/101887
- GB-A- 2 321 162
- GB-A- 2 405 556

## Description

The present invention relates to a mobile radio communications device arranged for connection within a cellular communications network and a local area wireless network and to a related method of connectivity.

While it is common for mobile radio communications device such as cell phone handsets to support connectivity not only to a cellular network but also to a local area wireless network, the signalling arising in relation to the cellular network does not commonly provide any indication as to the likely presence of such other local area wireless network. Accordingly, it is generally necessary for the cell phone handset to perform periodic searches in an attempt to identify the presence of signals from such other local area wireless network.

Within such a cell phone handset supporting both cellular connectivity and local area wireless connectivity, power requirements can prove to be disadvantageously high in view of the separate searches that have to be conducted in relation to the two technologies. The searches conducted for a local area wireless network are generally conducted on a periodic basis with the interval between repeated searches being predetermined and fixed.

As mentioned, such searching is a potentially power-intensive operation particularly if the repetition interval of the repeated searches is relatively short.

While it remains desirable for a user to detect an available local area wireless network as quickly as possible, and therefore retain a relatively short repetition interval, this is contrary to a common requirement for reducing power consumption and thereby increase battery life. Power consumption requirements are best reduced by employing relatively long intervals between the repeated searches.

A clear dichotomy arises between the desire to achieve quick and efficient connectivity to the local area wireless network, while also minimizing power consumption. Currently known mobile radio communication devices arranged to operate with both cellular and local area wireless network connectivity generally operate with a fixed search interval which is determined, as a compromise, to balance the two aforementioned competing requirements of short interval quick connection and long interval reduced power requirements.

However, through adopting such a compromise, the mobile radio communications device cannot in any way approach optimal operating conditions with regard to either requirement.

This leads to operational limitations and disadvantages within currently known mobile radio communication devices and related network connectivity methods of operation.

WO 98/27766 discloses a method and device for saving electricity in mobile multimode telecommunication terminals, wherein search frequency (scanning) for available telecommunication networks varies according to information on local availability of said networks.

GB 2405556 discloses a portable communication device comprising memory means for storing network search interval data and network search means for intermittently searching for a preferred network. The network search interval data is derived from the expected availability of a preferred network using, for example, network coverage information in conjunction with the detected location of the portable communication device. The network search interval represents an interval to elapse before the next search for the preferred network is initiated by the network search means. The time between successive searches for the preferred network by the network search means is varied using the network search interval data.

The present invention seeks to provide for a mobile radio communications device, and a related network connectivity method, having advantages over known such devices and methods.

According to one aspect of the present invention there is provided a mobile radio communications device arranged for connection within a cellular communications network and a local area wireless network, the device being arranged to perform repeated searches for a local area wireless network, **characterised in that** the device includes means for identifying local cells of the cellular communications network and control means arranged to vary the repetition interval of the said repeated searches for a local area wireless network in an inverse relationship responsive to the number of local cells of the cellular communications network identified.

The invention proves advantageous in that it can provide for a mobile radio communications device in which the repetition interval employed for the local area wireless network search can be varied in a readily responsible manner dependent upon the likelihood of locating a local area wireless network. Such likelihood is determined on the basis of an estimate of the number/density of local area wireless network transmitters in the vicinity of the device.

Importantly, the invention is derived from an appreciation that the number/density of local area wireless networks is likely to be mirrored by the number/density of local cells of the cellular network that are identified.

Advantageously, the device is arranged to compare the number of identified local cells of the cellular network against at least one threshold value and with at least two different local area wireless network search repetition interval regimes being available responsive to whether or not the said threshold value is exceeded.

In one particular embodiment, two threshold values are employed so as to differentiate between three repetition interval regimes.

In this manner, the repetition interval can be switched between a relatively short interval if the higher of the two thresholds is exceeded, a moderate interval if only the lower of the two thresholds is exceeded, and a relatively large interval if neither of the threshold values is exceeded.

Advantageously, the threshold values can be readily varied and re-determined as appropriate. Typically the values would be determined for a given technology and set at during production of the handset. The values may later be varied by the handset itself in response to the handset's own experience of local area wireless network search success rates for given numbers of local cells of the cellular network. Alternatively the settings may be updated as a result of a later handset software update. Other methods can also be envisaged.

As will be appreciated therefore, the variation in the repetition interval described above occurs in a stepped manner.

According to a further arrangement of the present invention, the repetition interval is arranged to vary dynamically in said inverse relationship to the number of identified local cells of the cellular network. No threshold values are therefore required and the repetition interval simply continues increasing or decreasing as the number of identified local cells of the cellular network decreases or increases.

The device is advantageously arranged such that the number of local cells of the cellular network is identified from measurements conducted therein. Alternatively, the number of local cells of the cellular network can be retrieved from broadcast information received from the cellular network.

Turning to a further feature of the present invention, the device can advantageously include means for detecting motion. Such means could simply be the detection of change of serving cell on the cellular network, or could use any of the more complex location systems that modem handsets provide. In this manner once motion of the handset is detected, this can readily initiate the determination of the number of local cells of the cellular network.

The device can further advantageously include an override mechanism by which a user can select a particular repetition interval when required.

Further, a user override can advantageously be provided in a location-specific manner so as to provide a predetermined repetition interval suited to a specific location. In this case the user can permanently select a particular repetition interval for a given location. The location can be determined by simple consideration of the identity code of the serving cell on the cellular network, or by any of the other methods available to mobile handsets.

Thus, in this manner when the device identifies that it has arrived at a particular location, the said predetermined, and constant, repetition interval is employed.

According to another aspect of the present invention, there is provided a network connection method for a mobile radio communications device operating within a cellular communications network and a local area wireless network, in which repeated searches for a local area wireless network are performed, the method including the steps of identifying local cells of the cellular communications network and varying the repetition interval of the said repeated searches for local area wireless network in an inverse relationship responsive to the number of identified local cells of the cellular network.

Advantageously, the method includes comparing the number of identified local cells of the cellular network against at least one threshold value and with one of at least two different repetition interval regimes being initiated responsive to whether or not the said threshold value is exceeded.

In one particular embodiment, two threshold values are employed so as to differentiate between three repetition interval regimes.

In this manner, the repetition interval can be switched between a relatively short interval if the higher of the two thresholds is exceeded, a moderate interval if any of the lower of the two thresholds is exceeded, and a relatively large interval if either of the threshold values is exceeded.

Advantageously, the threshold values can be readily varied and re-determined as appropriate.

As will be appreciated therefore, the variation in the repetition interval can occur in a stepped manner.

According to a further arrangement of the present invention, the method varies the repetition interval dynamically in said inverse relationship to the number of identified local cells of the cellular network. No threshold values are therefore necessarily required and the repetition interval simply continues increasing or decreasing as the number of identified local cells of the cellular network decreases or increases.

In one aspect of the method, the number of local cells of the cellular network is identified from measurements conducted within the device. Alternatively, the number of local cells of the cellular network can be retrieved from broadcast information received from the cellular network.

Further, the method can include the step of detecting motion of the device. Any method of motion detection supported by mobile handsets is suitable for this purpose. In this manner, once motion of the handset is detected, this can re-initiate the determination of the number of local cells of the cellular network.

As will be appreciated from the above, and as compared with the current art, the present invention can advantageously meet power-saving requirements through its control of the repetition interval employed searching for local area wireless networks.
While, in some scenarios, the repetition interval will remain short such that it might be expected that power consumption will remain relatively high, the control provided by the present invention dictates that such short search repetition intervals are only employed when the number of the likely available local area wireless networks is relatively high such that connectivity is achieved efficiently and quickly and the short-interval search can then be disabled until re-connection might be required. Also in scenarios in which the number of likely available local area wireless networks is relatively low, only relatively long repetition intervals are employed for the search procedure so as to not waste power on short repetition interval searches since the likelihood of achieving connection is likely to be relatively low and not enhanced by employing a relatively short repetition interval.

As will be appreciated from the above, the actual number or density of local area wireless networks does not itself need to be determined since the invention is based upon the realisation that number/density of the local area wireless networks will mirror the number/density of local cells of the cellular network. Advantageously therefore, the invention can simply employ functionality already in existence in relation to cellular network connectivity and in a manner achieving operational advantages in relation to local area wireless network connectivity.

Thus, it will be appreciated that the invention achieves advantages in reducing power consumption through avoiding local area wireless network measurements that in practice prove inappropriate and unnecessary.

The invention is described further hereinafter, by way of example only, with reference to the accompanying drawings in which:
Fig. 1 is a schematic block diagram of the mobile radio communications device in which the present invention can be employed;
Fig. 2 is a flow diagram illustrating network search procedure as currently employed;
Figs. 3-5 are schematic illustrations of variations in density of identified local cells of the cellular network and corresponding variations in density of local area wireless networks;
Figs. 6 and 7 are flow diagrams according to the operation of the mobile radio communications device according to embodiments of the present invention; and
Fig. 8 is a flow diagram of operation according to another embodiment of the present invention.

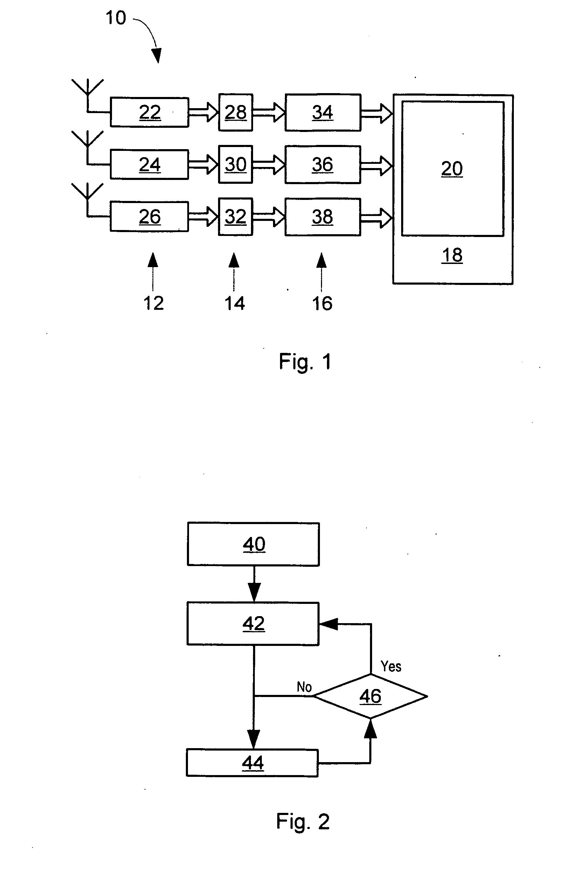

Turning first therefore to Fig. 1, there is provided a schematic illustration of the mobile radio communications device handset 10 arranged to support cellular connectivity, along with connectivity to at least one other wireless technology, herein identified as a local area wireless network.

As illustrated, the mobile radio communications device 10 includes a radio circuitry section 12, analogue to digital converter sections 14 and signal processing section 16.

The arrangement illustrated comprises a dual-mode mobile radio communications device 10 having GSM radio circuitry 22 and WCDMA radio circuitry 24. The wireless local area network technology 26 of the aforesaid other wireless technology is illustrated at 26, and each of the three respective radio circuits 22-26 feeds into respective three analogue digital converters 28, 30, 32 and subsequent signal processing arrangements 34, 36, 38.

Each of these signal processors 34-38 feeds into a central processing unit 18 encompassing protocol/control/application/user interface software 20. As will be appreciated, three separate radio circuits 22-26 are provided for the different radio technologies and, in accordance with the current art, separate search procedures are conducted in relation to the wireless local area network circuitry 26 in an attempt to identify available wireless local area type networks.

As noted above, it is necessary to perform searches for the presence of signals on the wireless local area network since the availability of such networks is not commonly indicated within the signalling associated with the cellular system.

The arrangement illustrated in Fig. 1 exhibits the disadvantages discussed hereinbefore in relation to the relatively high power consumption experienced due to the wireless local area networks searching procedures.

The procedure employed for such searching is illustrated with reference to Fig. 2 which comprises a schematic flow diagram relating to the same.

Thus, at step 40 the search interval employed for identifying the wireless local area network is implemented and, at step 42, a search for such wireless local area network is conducted. At step 44, the mobile radio communications device waits until the next appropriate moment before conducting a repeated search in an attempt to identify an appropriate wireless local area network.

This waiting procedure comprises a loop formed of a decision block 46 which seeks to determine if the fixed interval set in relation to step 40 has expired. If the fixed delay interval as determined at 46 has not have expired, then the control loop proceeds back via step 44.

If, however, at step 46, it is determined that the repetition interval has expired, then the procedure returns to step 42 where a search is again conducted for an appropriate wireless local area network.

Although not illustrated in Fig. 2, it should be appreciated that cellular operations are arranged to run in parallel with the wireless local area network operations illustrated in Fig. 2 and without conflict therebetween.

The present invention seeks to provide an improvement as compared with the above-mentioned procedure insofar as an estimate is provided as to the likelihood of the mobile radio communications device being located within an area covered by one or more wireless local area networks having regard to currently existing parameters associated with the cellular system to which the mobile radio communications device 10 is also connected.

The invention is based on the realisation that within the cellular system, cell sizes, and cell density tend to vary with population density such that, for example, the number of cells within urban areas cells are generally small and numerous, whereas within rural areas cells are generally relatively large and are few in number. Suburban areas tend to offer cell coverage between these two extremes.

On this basis, if the number of local cells reported within the signalling of the cellular system, or determined from handset measurements, is determined, the nature of the area within which the handset is located can be estimated and the number/density of wireless local area networks can be readily determined.

Thus, the presence of a relatively small number of local cells of the cellular network will serve to indicate that the mobile radio communications device is located within a rural area, whereas a relatively large number of identified local cells of the cellular network will indicate location within an urban area.

A relatively moderate number of identified local cells of the cellular network will indicate location within, for example, a suburban area.

As will be appreciated, the precise number of local cells of the cellular network need not be determined with any great accuracy although comparison with threshold values will serve to differentiate between the urban, rural, suburban areas noted above.

Also, it should be appreciated that the threshold values can advantageously be determined and varied having regard to the cellular technology actually in use so as to provide for more appropriate control functionality within the present invention.

The threshold values can also be dynamically varied in response to the handset's previous experience of the success rate of local wireless network searches in the presence of certain numbers of local cells of the cellular network.

With local area networks available for public access being far more numerous in urban areas, the direct correlation between cell density and wireless local area network density with regard to population density is advantageously employed by the present invention and its consideration of, for example, signalling data arising as part of the cellular system.

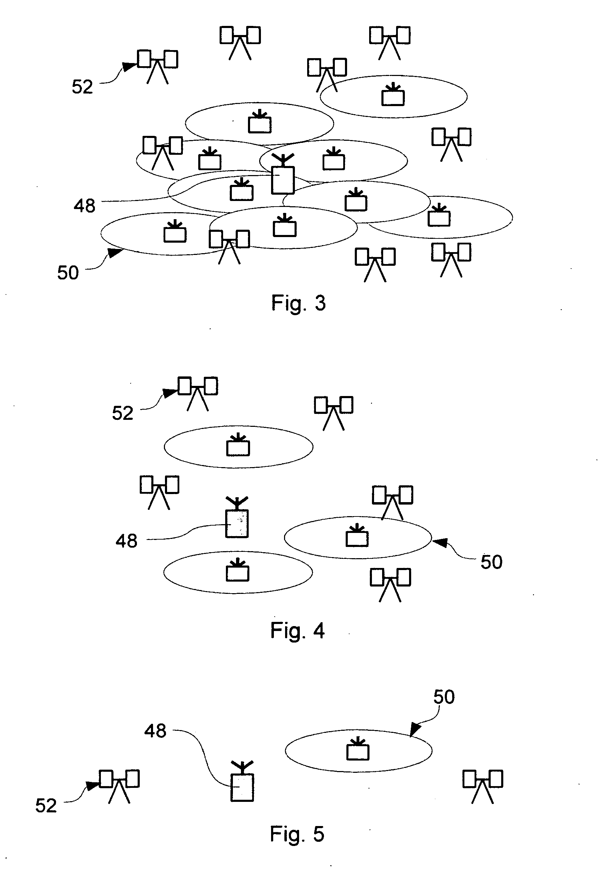

Turning now to Figs. 3-5, it will be appreciated how the number of local cells within the cellular system generally exhibits a direct correlation with the likelihood of the occurrence of one or more wireless local area networks.

First, turning to Fig. 3, there is shown a mobile radio communications device 48 according to an embodiment of the present invention and which is located in an area having a relatively high density/number of local cells of the cellular network 52

Fig. 3 therefore indicates the likely cell coverage for an urban area and there is a correspondingly relatively high number of wireless local area networks 50.

With regard to Fig. 4 however, which serves to illustrate the suburban area, it will be appreciated that both the number/concentration of local cells of the cellular network 52 and wireless local area networks 50 is reduced.

Turning finally to Fig. 5, which serves to illustrate a rural area in a schematic manner, it will be appreciated that the mobile radio communications device 48 is located within an area with very low density of local cells of the cellular network 52 and local area network 50 coverage.

Insofar as, within a urban area such as that illustrated in Fig. 3, there is likely to be a wide variety of wireless local area networks to which connectivity can be achieved, a relatively short, and albeit power-consuming, repetition interval can be employed since it is likely that network connectivity will be achieved relatively quickly in view of the large number of potentially acceptable wireless local area networks available. Thus, although a shorter repetition interval requiring relatively high power consumption, will be employed where location illustrated such as that in Fig. 3, it is unlikely that the search will have to be repeated to any great degree in view of the likelihood of early success in achieving network connection.

However, with regard to Figs. 4 and 5 it is determined that that the mobile radio communications device is found at a location where the number of wireless local area networks 50 is likely to be less than that illustrated in Fig. 3, then a corresponding increase in repetition interval for the wireless local area network searches is provided so as to save power-resources whilst not unduly limiting the likelihood of succeeding with achieving connectivity to the available wireless local area networks 50.

Such dynamic control of the wireless local area network search repetition interval proves an advantageous way of dealing with the activity/power-requirement dichotomy mentioned earlier.

With regard to the three network environments illustrated by Figs. 3-5, the search interval can readily comprise a simple three level control system in which a short interval is provided for urban environments, a moderate interval for suburban environments and a relatively long interval for rural locations. Alternatively of course, a simple sliding scale of search interval could be achieved and which is directly related, in an inverse manner, to the number of cells identified.

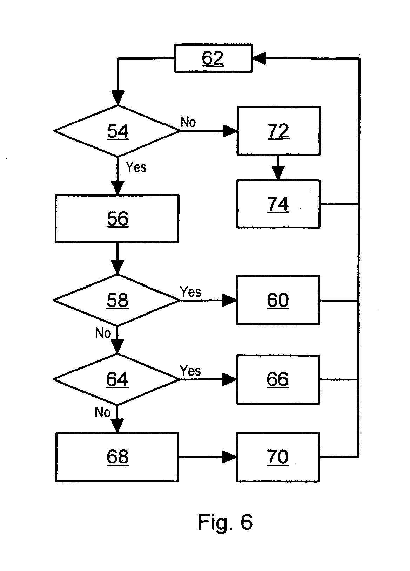

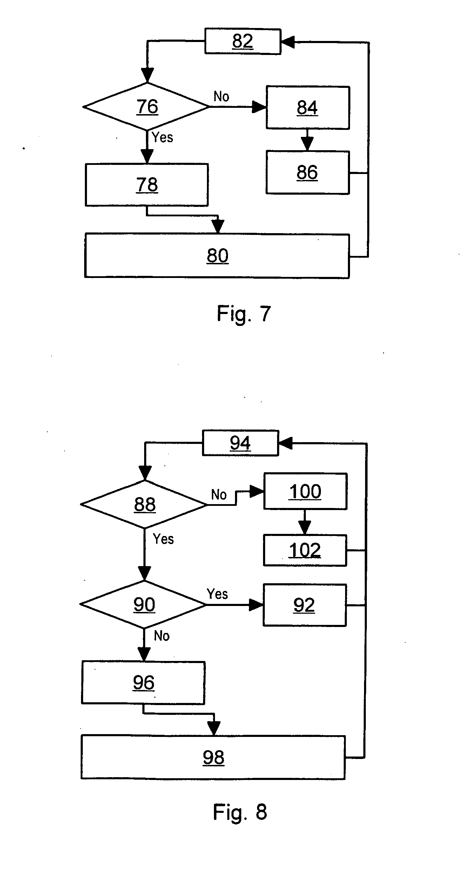

Turning now to Figs. 5 and 6, there are illustrated operating methods according to the present invention in which, with regard to Fig. 6, a simple three-level wireless local area network search procedure is provided, whereas, in Fig. 7, a dynamic sliding-scale wireless local area network search procedure is provided.

Turning first to Fig. 6, the mobile radio communications device handset first seeks to determine at 54 whether or not cellular coverage exists at its current location.

Assuming cellular coverage is identified, the method proceeds to step 56 at which a number of local cells of the cellular network is read from the broadcast information received at the handset.

At 58 it is then determined whether the number of identified local cells of the cellular network indicates that the handset is present within an urban location.

If an urban location is identified the process continues to step 60 where the wireless local area network search interval is set a minimum value.

The search procedure is then conducted at such minimum repetition interval for a predetermined period determined by the control step 62. When the said predetermined amount of time determined at step 62 has expired, then the method returns to step 54.

If, however, at step 58 it was determined that the handset was unlikely to be located in a urban area, then the method proceeds to step 64 where, for example, through comparison with a second threshold value, it is determined whether or not a handset might be found within a suburban location.

If, at step 64 it is found that the suburban environment is quite likely, then the method proceeds to step 66 where the wireless local area network search interval is set at a moderate level.

As previously with regard to the minimum repetition interval, the moderate repetition level is employed for a continuous period determined by control step 62.

Lastly, if at step 64 it is determined that, through comparison with the threshold values, the mobile radio communications device is unlikely to be located within a suburban area, then it is assumed that, on the basis of the number of identified local cells of the cellular network at step 68 that the mobile radio communications device is found within a rural location and so, at step 70, the wireless local area network search interval is set to a maximum so as to achieve a maximum power-saving.

Indeed, the search could be disabled so as to prevent any further power being employed in a search procedure.

Of course, as with step 60 and 66, if at step 70 the wireless search interval is set a maximum value, such search repetition at this repetition interval continues for a period of time determined at control step 62.

Again it should be appreciated that, although not illustrated, the wireless local area network procedure illustrated at step 66 can run parallel with normal cellular operations.

Returning to step 54, at which it was determined whether or not cellular coverage existed, if it is here determined that no such coverage exists, then at 72 it is determined that the device is located in an unpopulated region such that, at 74, the search interval is maximised, or indeed the search disabled.

Turning now to Fig. 7, a similar search procedure is illustrated with the exception that the two threshold values arising in relation to the embodiment of Fig. 6 are not employed. Thus, within Fig. 7, at step 76, the mobile radio communications device handset determines whether or not cellular coverage is available.

If said cellular coverage is found to be available, the method proceeds to step 78 where the number of local cells of the cellular network is determined either from the broadcast information received via the cellular system handset or by the handset's own measurements. Then at step 80, the wireless local area network search interval is set in a dynamic manner responsive to the number of local cells of the cellular network identified at step 78.

For example, the search interval could obey a relationship such as this: max-(max-min) * (number of cells/max number of cells). Other relationships can also be envisaged.

Then, the search repetition interval determined in this manner is employed for a period determined by way of a control step 82.

If, however, at step 76 it is determined that no cellular coverage is available, the method proceeds via steps 84 and 86 where it is determined that the handset is located within an unpopulated area such that, the wireless search interval can be set to maximum or the search disabled totally.

It should of course be appreciated that any appropriate sliding-scale algorithm can be employed at step 78, 80 and, also, the "max", "min" and "max number of cells possible" values can be readily configured as appropriate having regard to the particular cellular and wireless systems in use.

In practice, it can prove advantageous to set the "max number of cells" value to less than the theoretical maximum since, even for the densest urban areas, networks do not commonly use the theoretical maximum number of local cells as allowed for by the cellular standards.

As noted above, the number of local cells of the cellular network can be determined either from handset measurements, or from broadcast information received from the cellular system.

Also, the number of local cells of the cellular network identified can fall within two or more related cellular systems, such as, the cells appearing for WCDMA and GSM networks.

As a further enhancement, functionality can be included in the handset so as to detect handset motion and whereby, for example, the search repetition intervals can be reassessed as a result of the detection of motion.

It may be that motion simply triggers a repeat of the assessment mechanisms of figure 6, 7, or 8: the fact that it is identified that the handset is in motion, indicates that it is appropriate to re-evaluate the network coverage since the environment is likely to have changed since the repetition interval was last established. Alternatively if the rate or magnitude of motion is known, the motion itself may be used as an additional factor in the determination of the wireless network search repetition interval. If it is determined that the handset is moving relatively quickly, it might be considered that this will lead to a greater number of potential networks available for connection such that the repetition interval can be reduced.

Turning now to Fig. 8, there is illustrated a further embodiment of the present invention in which location information is advantageously determined by, and employed within, the mobile radio communications device handset employing the present invention.

Commencing at step 88, the method again seeks to identify whether or not cellular coverage is available.

Assuming cellular coverage is found, the method proceeds to step 90 where the location of the handset is determined. Preferably this is by way of the cellular network serving cell identity as this is available without any additional operations being required. However other location determining functions for example GPS are equally valid.

Once the current handset location is known it is determined whether or not the location is within a list of locations known to have (or to not have) wireless local area network coverage. The user of the handset can readily program particular locations, into a "known wireless location list" which is stored in the handset. Such locations may be for example in the user's home or at the user's workplace. At such locations the automatic determination of wireless local are network search interval as shown in figures 6 and 7 is overridden by the user's own search interval preference.

Then, when the location determining function (either by cellular network cell identity of otherwise) indicates that the mobile radio communications device is found at such a location, the wireless search interval can be set, as illustrated at step 92, to a specific value relevant to that location. For example, if it is determined that the handset is found at the user's office location, there might be a specific wireless local area network to which the user requires connection such that the search repetition interval can be reduced accordingly.

As illustrated in Fig. 8, such search interval can be maintained until such time as it is identified at step 94 that the handset has moved away from the location known to have wireless network coverage.

Returning to step 90, if it is determined that the location identified is not within the known wireless locations list, then the method proceeds to steps 96 and 98 which, in accordance with the present invention, mirrors step 78 and 80 as illustrated in relation to Fig. 7.

If, returning to step 88, it is determined that the mobile radio communications device handset has not found cellular coverage, then the method proceeds via steps 100 and 102 where it is determined that an unpopulated location has been identified such that the search interval is maximised or indeed the search is disabled, in a similar manner to step 84 and 86 as arising in relation to Fig. 7.

In view of the above it will therefore be appreciated that for use in the present invention, it proves possible to vary the search interval for wireless local area networks and indeed any appropriate wireless technology, such that the interval is based upon the reported, or observed, cellular network density at the handset. Power saving schemes employing reduction in the number of searches employing control of the search repetition interval can therefore be readily employed.

The present invention therefore advantageously serves to reduce mobile radio communications device handset power consumption and, accordingly, extend battery life and/or allow for further device miniaturisation.

## Claims

1. A mobile radio communications device (10, 48) arranged for connection within a cellular communications network (52) and a local area wireless network (50), the device being arranged to perform repeated searches for a local area wireless network, **characterised in that** the device includes means for identifying local cells of the cellular communications network and control means (18, 20) arranged to vary the repetition interval of the said repeated searches in an inverse relationship responsive to the number of local cells of the cellular network identified.

2. A device (10, 48) as claimed in claim 1, and arranged to compare the number of local cells of the cellular network (52) identified against at least one threshold value, wherein one of at least two different repetition interval regimes is initiated responsive to whether or not the said threshold value is exceeded.

3. A device (10, 48) as claimed in Claim 2, wherein two threshold values are employed so as to differentiate between three repetition interval regimes comprising short, moderate and long repetition intervals.

4. A device (10, 48) as claimed in Claim 2 or 3 wherein the at least one threshold value is adjusted in response to stored previous experience of local area wireless network (50) presence for given numbers of local cells of the cellular network (52).

5. A device (10, 48) as claimed in Claim 1, wherein the repetition interval is arranged to vary dynamically in said inverse relationship to the number of local cells of the cellular network (52) identified.

6. A device (10, 48) as claimed in any one or more of the preceding claims and arranged such that the number of local cells of the cellular network (52) is identified from measurements conducted therein.

7. A device (10, 48) as claimed in any one or more of the preceding claims wherein the number of local cells of the cellular network (52) identified is retrieved from broadcast information received from the cellular network.

8. A device (10, 48) as claimed in any one or more of the preceding claims, including means for detecting motion, and arranged to determine search repetition interval based on both the motion detected and the number of local cells of the cellular network (52).

9. A device (10, 48) as claimed in any one or more of the preceding claims and including override means by which a user can select a specific repetition interval when required.

10. A device (10, 48) as claimed in any one or more of the preceding claims and including a location-specific override means to allow for initiation of a predetermined repetition interval at a specific location.

11. A network connection method for a mobile radio communications device (10, 48) operating within a cellular communications network (52) and a local area wireless network (50), in which repeated searches for a local area wireless network are performed, the method including the steps of identifying (54; 76; 88) local cells of the cellular communications network and varying the repetition interval of the said repeated searches in an inverse relationship responsive to the number of local cells of the cellular network identified.

12. A method as claimed in Claim 11 and including comparing the number of local cells of the cellular network (52) identified against at least one threshold value and wherein one of two different repetition interval regimes is initiated responsive to whether or not the said threshold value is exceeded.

13. A method as claimed in Claim 12, wherein two threshold values are employed so as to differentiate between three repetition interval regimes comprising short, moderate and long intervals.

14. A method as claimed in Claim 12 or 13 wherein the at least one threshold value is adjusted in response to stored previous experience of local area wireless network (50) presence for given numbers of local cells of the cellular network (52).

15. A method as claimed in Claim 11, wherein the repetition interval is varied in a dynamic manner in said inverse relationship to the number of local cells of the cellular network (52) identified.

16. A method as claimed in any one or more of Claims 11 to 15, wherein the number of local cells of the cellular network (52) is identified from handset measurements.

17. A method as claimed in any one or more of Claims 11 to 15, wherein the number of local cells of the cellular network (52) is retrieved from broadcast information received from the cellular network.

18. A method as claimed in any one or more of the preceding claims wherein the search repetition interval is based on both detected motion and the number of local cells of the cellular network (52).

19. A method as claimed in any one or more of claims 11 to 18 and including a user override option for a user-selected step of specifying the repetition interval when required.

20. A method as claimed in any one or more of Claims 11 to 19 and including the step of overriding control of the repetition interval in a location-specific manner.

## Patentansprüche

1. Mobiles Funkkommunikationsgerät (10, 48) für den Anschluss an ein zelluläres Kommunikationsnetz (52) und ein lokales drahtloses Netzwerk (50), wobei das Gerät die Aufgabe hat, wiederholte Suchen nach einem lokalen drahtlosen Netzwerk durchzuführen, **dadurch gekennzeichnet, dass** das Gerät Mittel zum Identifizieren lokaler Zellen des zellularen Kommunikationsnetzes und Steuermittel (18, 20) zum Variieren des Wiederholungsintervalls der genannten wiederholten Suchen in einer Umkehrbeziehung als Reaktion auf die Zahl der identifizierten lokalen Zellen des zellularen Netzes beinhaltet.

2. Gerät (10, 48) nach Anspruch 1 mit der Aufgabe, die Anzahl der identifizierten lokalen Zellen des zellularen Netzes (52) mit wenigstens einem Schwellenwert zu vergleichen, wobei eines von wenigstens zwei unterschiedlichen Wiederholungsintervall-Regimen als Reaktion darauf gestartet wird, ob der genannte Schwellenwert überschritten wird oder nicht.

3. Gerät (10, 48) nach Anspruch 2, wobei zwei Schwellenwerte verwendet werden, um zwischen drei Wiederholungsintervall-Regimen zu unterscheiden, die kurze, mäßige und lange Wiederholungsintervalle umfassen.

4. Gerät (10, 48) nach Anspruch 2 oder 3, wobei der wenigstens eine Schwellenwert als Reaktion auf gespeicherte frühere Erfahrungen mit der Anwesenheit eines lokalen drahtlosen Netzwerks (50) für gegebene Zahlen von lokalen Zellen des zellularen Netzes (52) justiert wird.

5. Gerät (10, 48) nach Anspruch 1, wobei das Wiederholungsintervall so ausgelegt ist, dass es sich in der genannten Umkehrbeziehung zu der Anzahl von identifizierten lokalen Zellen des zellularen Netzes (52) dynamisch verändert.

6. Gerät (10, 48) nach einem oder mehreren der vorherigen Ansprüche, das so gestaltet ist, dass die Zahl der lokalen Zellen des zellularen Netzes (52) anhand von darin durchgeführten Messungen identifiziert wird.

7. Gerät (10, 48) nach einem oder mehreren der vorherigen Ansprüche, wobei die Zahl der identifizierten lokalen Zellen des zellularen Netzes (52) anhand von von dem zellularen Netz empfangenen Broadcast-Informationen erhalten wird.

8. Gerät (10, 48) nach einem oder mehreren der vorherigen Ansprüche mit Mitteln zum Erkennen von Bewegung und mit der Aufgabe, ein Suchwiederholungsintervall auf der Basis der erfassten Bewegung und der Anzahl der lokalen Zellen des zellularen Netzes (52) zu ermitteln.

9. Gerät (10, 48) nach einem oder mehreren der vorherigen Ansprüche mit einem Override-Mittel, mit dem ein Benutzer bei Bedarf ein bestimmtes Wiederholungsintervall auswählen kann.

10. Gerät (10, 48) nach einem oder mehreren der vorherigen Ansprüche und mit einem ortsspezifischen Override-Mittel, um es zuzulassen, dass ein vorbestimmtes Wiederholungsintervall an einem bestimmten Ort gestartet wird.

11. Netzwerkansehlussverfahren für ein mobiles Funkkommunikationsgerät (10, 48), das in einem zellularen Kommunikationsnetz (52) und einem lokalen drahtlosen Netzwerk (50) arbeitet, in dem wiederholte Suchen nach einem lokalen drahtlosen Netzwerk durchgerührt werden, wobei das Verfahren die Schritte des Identifizierens (54; 76; 88) lokaler Zellen des zellularen Kommunikationsnetzes und des Variierens des Wiederholungsintervalls der genannten wiederholten Suchen in einer Umkehrbeziehung als Reaktion auf die Anzahl von identifizierten lokalen Zellen des zellularen Netzes beinhaltet.

12. Verfahren nach Anspruch 11, das das Vergleichen der Anzahl von identifizierten lokalen Zellen des zellularen Netzes (52) mit wenigstens einem Schwellenwert beinhaltet und wobei eines von zwei unterschiedlichen Wiederholungsintervall-Regimen als Reaktion darauf gestartet wird, ob der genannte Schwellenwert überschritten wird oder nicht.

13. Verfahren nach Anspruch 12, wobei zwei Schwellenwerte verwendet werden, um zwischen drei Wiederholungsintervall-Regimen zu unterscheiden, die kurze, mäßige und lange Intervalle umfassen.

14. Verfahren nach Anspruch 12 oder 13, wobei der wenigstens eine Schwellenwert als Reaktion auf gespeicherte vorherige Erfahrungen mit der Anwesenheit eines lokalen drahtlosen Netzwerks (50) für gegebene Zahlen von lokalen Zellen des zellularen Netzes (52) justiert wird.

15. Verfahren nach Anspruch 11, wobei das Wiederholungsintervall in der genannten Umkehrbeziehung zu der Anzahl von identifizierten lokalen Zellen des zellularen Netzes (52) auf dynamische Weise variiert wird.

16. Verfahren nach einem oder mehreren der Ansprüche 11 bis 15, wobei die Zahl der lokalen Zellen des zellularen Netzes (52) anhand von Handset-Messwerten identifiziert wird.

17. Verfahren nach einem oder mehreren der Ansprüche 11 bis 15, wobei die Zahl der lokalen Zellen des zellularen Netzes (52) anhand von von dem zellularen Netz empfangenen Broadcast-Informationen erhalten wird.

18. Verfahren nach einem oder mehreren der vorherigen Ansprüche, wobei das Suchwiederholungsintervall auf erkannter Bewegung und auf der Anzahl von lokalen Zellen des zellularen Netzes (52) basiert.

19. Verfahren nach einem oder mehreren der Ansprüche 11 bis 18 mit einer Benutzer-Override-Option für einen Benutzerauswahlschritt, um bei Bedarf das Wiederholungsintervall vorzugeben.

20. Verfahren nach einem oder mehreren der Ansprüche 11 bis 19, das den Schritt des Umgehens der Steuerung des Wiederholungsintervalls auf eine ortsspezifische Weise beinhaltet.

## Revendications

1. Un dispositif de communication radio mobile (10, 48) agencé de façon à être relié à l'intérieur d'un réseau de communication cellulaire (52) et d'un réseau local sans fil (50), le dispositif étant agencé de façon à exécuter des recherches répétées d'un réseau local sans fil, **caractérisé en ce que** le dispositif comprend un moyen d'identification de cellules locales du réseau de communication cellulaire et un moyen de commande (18, 20) agencé de façon à varier l'intervalle de répétition desdites recherches répétées dans une relation inverse en réponse au nombre de cellules locales identifiées du réseau cellulaire.

2. Un dispositif (10, 48) selon la Revendication 1, et agencé de façon à comparer le nombre de cellules locales identifiées du réseau cellulaire (52) à au moins une valeur seuil, où un d'au moins deux régimes d'intervalle de répétition différents est initié en réponse au fait que ladite valeur seuil est dépassée ou non.

3. Un dispositif (10, 48) selon la Revendication 2, où deux valeurs seuils sont utilisées de façon à distinguer entre trois régimes d'intervalle de répétition comprenant des intervalles de répétition courts, modérés et longs.

4. Un dispositif (10, 48) selon la Revendication 2 ou 3 où la au moins une valeur seuil est ajustée en réponse à des connaissances antérieures conservées en mémoire de présence de réseau local sans fil (50) pour des nombres donnés de cellules locales du réseau cellulaire (52).

5. Un dispositif (10, 48) selon la Revendication 1, où l'intervalle de répétition est agencé de façon à varier dynamiquement dans ladite relation inverse au nombre de cellules locales identifiées du réseau cellulaire (52).

6. Un dispositif (10, 48) selon l'une quelconque ou plusieurs des Revendications précédentes et agencé de sorte que le nombre de cellules locales du réseau cellulaire (52) soit identifié à partir de mesures menées sur celui-ci.

7. Un dispositif (10, 48) selon l'une quelconque ou plusieurs des Revendications précédentes où le nombre de cellules locales identifiées du réseau cellulaire (52) est récupéré à partir d'informations de radiodiffusion reçues du réseau cellulaire.

8. Un dispositif (10, 48) selon l'une quelconque ou plusieurs des Revendications précédentes, comprenant un moyen de détection de mouvement, et agencé de façon à déterminer un intervalle de répétition de recherche basé sur à la fois le mouvement détecté et le nombre de cellules locales du réseau cellulaire (52).

9. Un dispositif (10, 48) selon l'une quelconque ou plusieurs des Revendications précédentes et comprenant un moyen de supplantation grâce auquel un utilisateur peut sélectionner un intervalle de répétition spécifique si nécessaire.

10. Un dispositif (10, 48) selon l'une quelconque ou plusieurs des Revendications précédentes et comprenant un moyen de supplantation spécifique à l'emplacement destiné à permettre l'initiation d'un intervalle de répétition prédéterminé à un emplacement spécifique.

11. Un procédé de connexion de réseau pour un dispositif de communication radio mobile (10, 48) fonctionnant à l'intérieur d'un réseau de communication cellulaire (52) et d'un réseau local sans fil (50), dans lesquels des recherches répétées d'un réseau local sans fil sont exécutées, le procédé comprenant les opérations d'identification (54 ; 76 ; 88) de cellules locales du réseau de communication cellulaire et de variation de l'intervalle de répétition desdites recherches répétées dans une relation inverse en réponse au nombre de cellules locales identifiées du réseau cellulaire.

12. Un procédé selon la Revendication 11 et comprenant la comparaison du nombre de cellules locales identifiées du réseau cellulaire (52) à au moins une valeur seuil et où l'un de deux régimes d'intervalle de répétition différents est initié en réponse au fait que ladite valeur seuil est dépassée ou non.

13. Un procédé selon la Revendication 12, où deux valeurs seuils sont utilisées de façon à distinguer entre trois régimes d'intervalle de répétition comprenant des intervalles courts, modérés et longs.

14. Un procédé selon la Revendication 12 ou 13 où la au moins une valeur seuil est ajustée en réponse à des connaissances antérieures conservées en mémoire de présence de réseau local sans fil (50) pour des nombres donnés de cellules locales du réseau cellulaire (52).

15. Un procédé selon la Revendication 11, où l'intervalle de répétition est varié d'une manière dynamique dans ladite relation inverse au nombre de cellules locales identifiées du réseau cellulaire (52).

16. Un procédé selon l'une quelconque ou plusieurs des Revendications 11 à 15, où le nombre de cellules locales du réseau cellulaire (52) est identifié à partir de mesures de combiné.

17. Un procédé selon l'une quelconque ou plusieurs des Revendications 11 à 15, où le nombre de cellules locales du réseau cellulaire (52) est récupéré à partir d'informations de radiodiffusion reçues du réseau cellulaire.

18. Un procédé selon l'une quelconque ou plusieurs des Revendications précédentes où l'intervalle de répétition de recherche est basé sur à la fois un mouvement détecté et le nombre de cellules locales du réseau cellulaire (52).

19. Un procédé selon l'une quelconque ou plusieurs des Revendications 11 à 18 et comprenant une option de supplantation par l'utilisateur pour une opération sélectionnée par l'utilisateur de spécification de l'intervalle de répétition si nécessaire.

20. Un procédé selon l'une quelconque ou plusieurs des Revendications 11 à 19 et comprenant l'opération de supplantation de la commande de l'intervalle de répétition d'une manière spécifique à l'emplacement.
